# EUROPEAN PATENT APPLICATION

(11) **EP 4 765 428 A1**
(43) Date of publication of application: **24.06.2026**
(21) Application number: 25787043.6
(22) Date of filing: 21.03.2025
(51) Int. Cl.: H01M 50/383, H01M 10/658, H01M 10/625, H01M 50/367, H01M 50/249, H01M 50/204, H01M 10/647

(54) **BATTERY MODULE, AND BATTERY PACK AND VEHICLE COMPRISING SAME**

(30) Priority: 12.04.2024 KR 20240049116
(71) Applicant: LG Energy Solution, Ltd., Seoul 07335 (KR)
(72) Inventor: JANG, Sung-Hwan, Daejeon 34122 (KR); KIM, Gwan-Woo, Daejeon 34122 (KR); KIM, Jae-Wook, Daejeon 34122 (KR)
(74) Representative: BCKIP Part mbB
(86) International application number: PCT/KR2025/003663
(87) International publication number: WO 2025/216451

(57) **Abstract**

The present disclosure relates to a battery module stored in a pack case, and the battery module may include: a plurality of battery cells; and a module case configured to store the plurality of battery cells in an inner space and having a protrusion protruding outward toward an inner surface of the pack case.

## Description

### TECHNICAL FIELD

The present disclosure relates to a battery module, and a battery pack and vehicle including the same. Specifically, the present disclosure relates to a battery module capable of suppressing thermal propagation inside the battery module, and a battery pack and vehicle including the same.

This application is based on and claims priority from Korean Patent Application No. 10-2024-0049116, filed on April 12, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module housing. Therefore, if a thermal event occurs in any one of the battery cells, the high-temperature gas and flame discharged therefrom may propagate to adjacent battery cells, leading to a chain reaction of battery cell explosions, which poses a significant safety risk.

Therefore, there is a need to develop a structure capable of suppressing and delaying thermal propagation by more reliably partitioning battery cells so that, even if a thermal event occurs in some battery cells inside a battery module, gas or flames are prevented from spreading to other battery cells inside the battery module and causing thermal runaway.

### DISCLOSURE

### Technical Problem

The present disclosure is designed to solve the problems of the related art, and therefore the present disclosure is directed to providing a battery module capable of effectively preventing or delaying thermal runaway propagation between battery cells by reliably partitioning the battery cells.

The present disclosure is also to provide a battery pack and vehicle including such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module stored in a pack case, and the battery module may include: a plurality of battery cells; and a module case configured to store the plurality of battery cells in an inner space and having a protrusion protruding outward toward an inner surface of the pack case.

The protrusion may be configured to partition a space between the module case and the pack case.

The battery module may further include a blocking member configured to block a flow of heat or fluid between the battery cells in the inner space of the module case.

The blocking member may be configured such that its end is in contact with an inner surface of the module case.

The protrusion may be configured to have an inner space formed thereon, and the blocking member may be configured such that its end is inserted into the inner space of the protrusion.

The protrusion may be configured to be in contact with the inner surface of the pack case.

The protrusion may be configured such that at least a portion thereof is insertable into the inner surface of the pack case.

The pack case may include a support configured to protrude inward from the inner surface, and the protrusion may be configured to partially overlap the support.

A plurality of venting holes configured to discharge venting gas generated from the battery cell to the outside may be formed on an upper surface of the module case, and the protrusion may be interposed between the venting holes.

The protrusion may be configured to extend along a longitudinal direction of the battery cell.

A plurality of protrusions may be provided to be spaced apart from each other, and a venting path may be formed between adjacent protrusions.

The battery module may further include a cover member provided between the adjacent protrusions and configured to be openable by venting gas inside the venting path.

In another aspect of the present disclosure, there is provided a battery pack including a battery module according to the present disclosure.

In another aspect of the present disclosure, there is provided a vehicle including a battery pack according to the present disclosure.

In another aspect of the present disclosure, there is provided a battery pack including: a pack case having a storage space formed therein; and a battery module stored in the storage space of the pack case, and including a plurality of battery cells and a module case configured to store the plurality of battery cells, and the module case may include a protrusion configured to protrude outward toward an inner surface of the pack case.

In addition, in the battery pack according to an embodiment of the present disclosure, the battery module may further include a blocking member configured to block a flow of heat or fluid between the battery cells in an inner space of the module case, and having an end inserted into an inner space of the protrusion.

In addition, in the battery pack according to an embodiment of the present disclosure, the protrusion may be configured to be in contact with the inner surface of the pack case.

### Advantageous Effects

According to one aspect of the present disclosure, the venting path can be reliably sectioned and separated outside the module case by the protrusion of the module case. Therefore, according to the above aspect of the present disclosure, high-temperature gas or flame discharged to the space outside the module case can be suppressed from moving along the stacking direction of the battery cells.

That is, according to the above aspect of the present disclosure, even if a thermal event occurs in some battery cells in the battery module, gas or flames can be effectively prevented or delayed from spreading to other battery cells in the battery module and causing thermal runaway. As a result, the safety and reliability of the battery module can be secured.

In addition, according to another aspect of the present disclosure, high-temperature gas or flame discharged to the outside of the battery module can be suppressed from flowing back into the battery module.

In addition, according to another aspect of the present disclosure, events due to thermal runaway in a battery pack including a plurality of battery modules or a device equipped with them, such as fire or explosion, can be prevented or delayed.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a cross-sectional view of a battery module according to an embodiment of the present disclosure, which may be a cross-sectional view, for example, taken along line I - I' in FIG. 1.
FIG. 4 is an enlarged view of part A in FIG. 3 and illustrates movement of gas or the like during thermal runaway of a battery module according to an embodiment of the present disclosure.
FIG. 5 is a drawing illustrating a state in which a top plate included in a battery module is separated according to an embodiment of the present disclosure.
FIG. 6 is a drawing illustrating a protrusion included in a battery module according to another embodiment of the present disclosure.
FIG. 7 is a drawing illustrating a protrusion included in a battery module according to another embodiment of the present disclosure.
FIG. 8 is a drawing illustrating a protrusion included in a battery module according to another embodiment of the present disclosure.
FIG. 9 is a top perspective view of a battery module according to an embodiment of the present disclosure, which illustrates a venting path of a battery module according to an embodiment of the present disclosure.
FIG. 10 and FIG. 11 are drawings illustrating a cover member included in a battery module according to another embodiment of the present disclosure.
FIG. 12 is an exploded perspective view of a battery pack according to an embodiment of the present disclosure.
FIG. 13 is an exploded perspective view of a battery pack according to another embodiment of the present disclosure.
FIG. 14 is a plan view of a battery pack according to another embodiment of the present disclosure, which illustrates movement of gas or the like during thermal runaway of a battery module according to an embodiment of the present disclosure.
FIG. 15 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up, down, left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

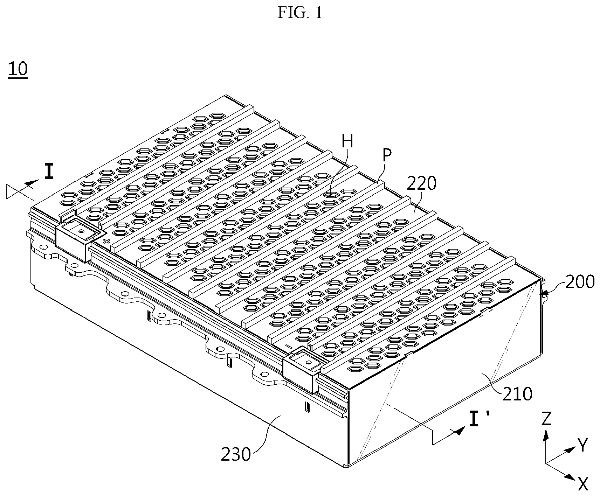

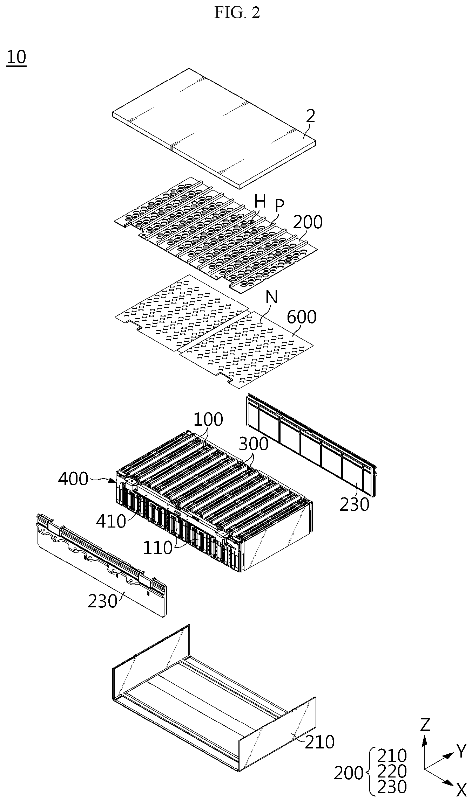

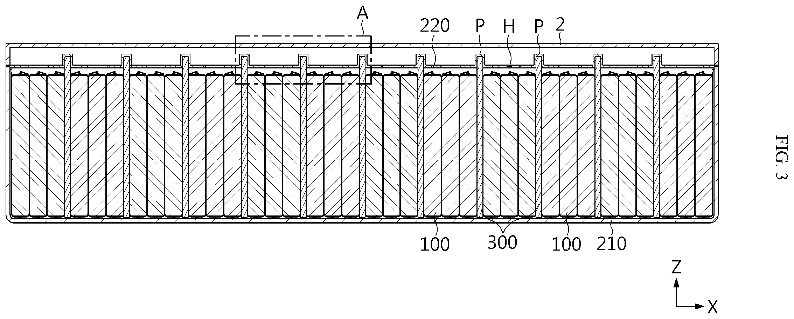

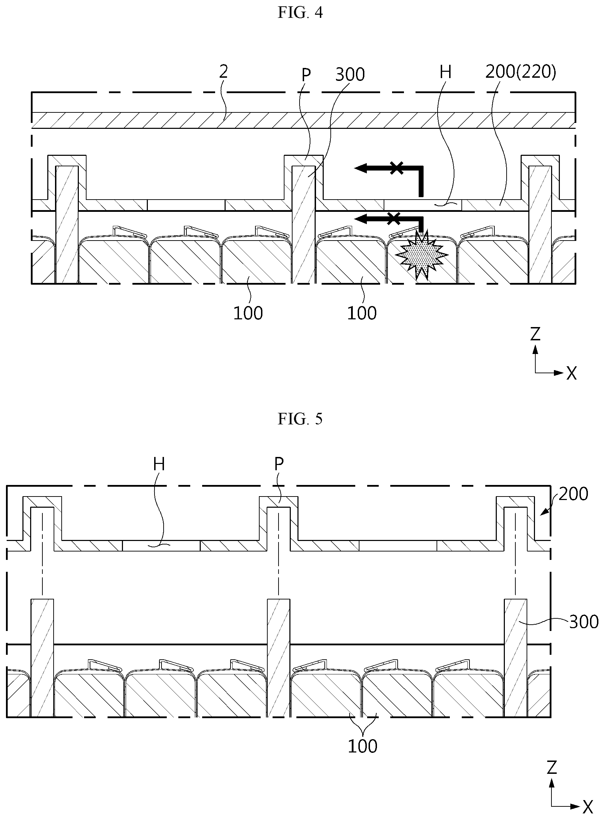

FIG. 1 is an overall perspective view of a battery module according to an embodiment of the present disclosure, and FIG. 2 is an exploded perspective view of a battery module according to an embodiment of the present disclosure. FIG. 3 is a cross-sectional view of a battery module according to an embodiment of the present disclosure, which may be a cross-sectional view, for example, taken along line I - I' in FIG. 1. In addition, FIG. 4 is an enlarged view of part A in FIG. 3 and illustrates movement of gas or the like during thermal runaway of a battery module according to an embodiment of the present disclosure.

Referring to FIGS. 1 to 4, a battery module 10 according to an embodiment of the present disclosure may include a battery cell 100 and a module case 200. In addition, the battery module 10 according to an embodiment of the present disclosure may be configured to be stored in a pack case 2. The pack case 2 may be configured to store the battery module 10 from the outside of the battery module 10.

A plurality of battery cells 100 may be provided. The plurality of battery cells 100 may be provided to be stacked in one direction. For example, as shown in FIG. 2, the plurality of battery cells 100 may be stacked along the left-right direction (X-axis direction).

The battery cell 100 may include an electrode assembly and a cell case that stores the electrode assembly. The cell case may store the electrode assembly in a receiving portion, and the edges of the receiving portion may be heat-fused to form sealing portions. The sealing portion may be provided on three of the four edges of the battery cell 100.

In addition, each of the plurality of battery cells 100 may have an electrode lead 110. The electrode lead 110 may be connected to the electrode assembly, and may extend to the outside of the cell case, functioning as an electrode terminal.

A pair of electrode leads 110 may be provided, and the pair of electrode leads 110 may extend outward from both ends of the battery cell 100, for example, in the longitudinal direction (±Y-axis directions). In this case, the pair of electrode leads 110 may be a positive electrode lead and a negative electrode lead. The battery cell 100 may be configured such that two electrode leads 110 are located only at one end in the Y-axis direction, for example, at the end in the +Y-axis direction, as necessary.

The present disclosure is not limited to a specific type or shape of the battery cell 100, and various battery cells 100 known at the time of filing the present disclosure may be applied. In the present embodiment, although a pouch-type secondary battery with high energy density and easy stacking will be described as shown in the drawing, it is obvious that a cylindrical or prismatic secondary battery may also be applied to the battery cell 100.

Referring to FIG. 2, the battery module 10 of the present disclosure may further include a bus-bar frame assembly 400. The bus-bar frame assembly 400 may be configured to cover at least one side of the plurality of battery cells 100. In the present embodiment, as shown in FIG. 2, the bus-bar frame assembly 400 may be coupled to the front and rear sides of the plurality of battery cells 100.

The bus-bar frame assembly 400 may include a bus-bar frame 410 and a plurality of bus-bars 420. The bus-bar frame 410 may be provided to be coupled substantially to the front and rear sides of the plurality of battery cells 100. The bus-bar frame 410 may have slits through which the electrode leads 110 of the battery cells 100 extend outward in the +Y-axis or -Y-axis direction. In addition, the bus-bar frame 410 may be formed of a material having electrical insulation, such as a plastic material, and configured such that the bus-bar 420 may be attached to the outer surface.

The plurality of bus-bars 420, as a means for connecting the battery cells 100 in series and/or in parallel, may be formed of a metal material, such as copper, aluminum, nickel, etc., and may be configured in the shape of bars. The electrode leads 110 of the battery cells 100 may pass through the slits of the bus-bar frame 410 and extend outside the bus-bar frame 410, and the extending portions may be attached to the surface of the bus-bar 420 by welding or the like.

The module case 200 may be configured to store a plurality of battery cells 100. Specifically, the module case 200 may be configured to have an inner space formed therein and store a plurality of battery cells 100 in the inner space.

The module case 200 may be configured as a metal material having rigidity and heat resistance in order to physically or chemically protect the stored battery cells 100.

Meanwhile, one side of the module case 200 and the pack case 2 may be provided to be spaced a predetermined distance apart from each other. In such a case, if a thermal event occurs in any one battery cell 100, venting gas or flames are likely to spread from the outer space of the module case 200, that is, the space between the module case 200 and the pack case 2, to the other adjacent battery cells 100.

Therefore, a protrusion P may be provided in the module case 200 of the battery module 10 according to an embodiment of the present disclosure. The protrusion P may be provided on one surface of the module case 200. For example, as shown in the embodiment illustrated in FIG. 3, the protrusion P is provided on the upper surface of the module case 200, but the position of the protrusion P is not limited thereto.

The protrusion P may be configured to at least partly protrude outward from one surface of the module case 200. The protrusion P may be configured to protrude toward the inside of the pack case 2. For example, as disclosed in the embodiment illustrated in FIGS. 3 and 4, the protrusion P may protrude upward from the upper surface of the module case 200 toward the upper surface of the pack case 2.

The protrusion P may be configured to be attached to the outer surface of the module case 200. Alternatively, the protrusion P may be formed, as a part of the module case 200, integrally with the module case 200.

The protrusion P may be positioned above adjacent battery cells 100 and between them. Accordingly, the battery cells 100 may be partitioned and separated in the outer space of the module case 200. According to the above-implemented configuration of the present disclosure, as indicated by the bold arrow in FIG. 4, when a thermal event occurs in a battery cell 100, venting gas, flames, and/or particles may be prevented from spreading to the adjacent battery cells 100 beyond the protrusions P in the outer space of the module case 200. As a result, according to the above-implemented configuration of the present disclosure, thermal runaway propagation between the battery cells 100 may be effectively prevented or delayed. Therefore, the safety and reliability of the battery module 10 may be secured.

In particular, the protrusion P may be disposed in the space between the module case 200 and the pack case 2. The protrusion P may be configured to partition the space between the module case 200 and the pack case 2.

When a thermal event occurs in any one battery cell 100, venting gas or flame may move toward the space between the module case 200 and the pack case 2, and such venting gas or flame is likely to move along the stacking direction (left-right direction) of the battery cells 100 in the space between the module case 200 and the pack case 2 and to spread to adjacent battery cells 100. However, according to the above-implemented configuration of the present disclosure, when a thermal event occurs in any one battery cell 100, high-temperature venting gas or flame may be suppressed from spreading to adjacent battery cells 100 along the stacking direction (left-right direction) of the battery cells 100 in the space between the module case 200 and the pack case 2.

In addition, referring to FIGS. 2 to 4, the battery module 10 according to an embodiment of the present disclosure may further include a blocking member 300. The blocking member 300 may be provided in the inner space of the module case 200. The blocking member 300 may be provided between the battery cells 100. At least one blocking member 300 may be included in one battery module 10. A plurality of blocking members 300 may be provided along one direction in which the battery cells 100 are arranged. The blocking member 300 may be provided to be disposed for at least one battery cell 100.

In particular, the blocking member 300 may be configured to partition the plurality of battery cells 100. The blocking member 300 may be configured to group the plurality of battery cells 100. For example, as shown in FIG. 3, the blocking member 300 may be disposed for each group of three battery cells 100, thereby splitting the battery cells 100 into groups of three.

The blocking member 300 may be configured to block heat generated when a thermal event occurs inside the battery module 10. That is, the blocking member 300 may be configured to block the flow of heat or fluid between the battery cells 100. Here, the fluid may include venting gas, flames, particles, and the like.

To this end, the blocking member 300 may be made of a material having excellent heat resistance and/or fire resistance. As a result, the blocking member 300 may be configured not to be deformed even at high temperature and high pressure and to remain in a sealed structure. For example, the blocking member 300 may be configured as an insulating pad that is thinner than the battery cell 100. In addition, the blocking member 300 may be configured in the form of a compressible pad formed of, for example, a material such as silicone or aerogel.

According to the above-implemented configuration of the present disclosure, even if a thermal event occurs in any one of the battery cells 100 grouped by the blocking members 300, venting gas, flames, and/or particles may be suppressed from moving to other groups of battery cells 100. The thermal runaway propagation may be effectively prevented or delayed between the battery cells 100. Therefore, the safety and reliability of the battery module 10 may be secured.

In addition, according to the above-implemented configuration of the present disclosure, the blocking member 300 may contribute to the structural rigidity of the battery cells 100 by compressing the battery cells 100 when the battery cells 100 swell.

This blocking member 300 may be provided to extend further upward than the battery cell 100. The blocking member 300 may be provided to extend further upward than the receiving portion of the battery cell 100. That is, the vertical height of the blocking member 300 may be configured greater than the vertical height of the battery cell 100.

According to the above-implemented configuration of the present disclosure, the blocking member 300 may more reliably partition and separate the battery cells 100, thereby reliably blocking the movement of venting gas or flames inside the module case 200.

In this case, the blocking member 300 may be configured such that its end is in contact with the inner surface of the module case 200. In particular, the blocking member 300 may be configured such that its end is in contact with the inner surface of the protrusion P. That is, the protrusion P may be provided on the blocking member 300, and the upper surface of the blocking member 300 may be in contact with the protrusion P.

According to the above-implemented configuration of the present disclosure, the gap between the blocking member 300 and the module case 200 may be minimized, so that the space in which the venting gas may flow inside the module case 200 may be reduced, and thus thermal runaway propagation to other adjacent battery cells 100 may be prevented.

FIG. 5 is a drawing illustrating a state in which a top plate included in a battery module is separated according to an embodiment of the present disclosure.

Referring to FIG. 5 and other drawings, the module case 200 may include a case body 210 and a top plate 220. The case body 210 may be configured such that the battery cells 100 are seated thereon. This case body 210 may be made of a metal material having rigidity and heat resistance to physically or chemically protect the received battery cells 100.

In this case, the case body 210 may have an upper opening, and front and rear openings. For example, the case body 210 may be configured as a U-frame. In the case where the case body 210 is configured as a U-frame, it may be provided to cover the left and right sides and the lower side of the plurality of battery cells 100. The case body 210 may include left and right plates covering the left and right sides of the plurality of battery cells 100, and a lower plate covering the lower side of the plurality of battery cells 100. In addition, the left plate, right plate, and lower plate may be configured in an integrated form.

The top plate 220 may be provided to form the upper side of the module case 100. In the case where the case body 210 is provided as a U-frame, the top plate 220 may be coupled to cover the upper opening of the case body 210. The top plate 220 may be welded to the case body 210. In this case, the top plate 220 and the case body 210 may be coupled to each other into a square tube with front and rear openings.

In addition, referring to FIG. 2 and other drawings, the module case 200 may include end plates 230 provided on the front and rear openings of the case body 210. The end plate 230 may be welded to the case body 210. Although not shown in the drawings for convenience, the end plate 230 may be configured such that, for example, an inner surface is made of an insulating material and an outer surface is made of a metal material. In addition, the end plate 230 may be partially provided with holes or slits for exposing components that are required to be exposed to the outside, such as a positive electrode terminal and negative electrode terminal or a connector of the battery module 10.

In addition, the module case 200 may be formed in various other shapes. For example, the module case 200 may include a box-shaped lower case having an upper opening, and an upper cover provided to cover the upper opening of the lower case.

In this case, as disclosed in the embodiment illustrated in FIG. 5, the protrusion P may be formed on the top plate 220. The protrusion P may be provided on the upper surface of the top plate 220. High-temperature gases such as venting gas or flames generated from the battery cells 100 have a strong tendency to rise, and may head toward the empty space provided above the battery cells 100. In this case, according to the above-implemented configuration of the present disclosure, since the protrusion P is provided above the battery cells 100, heat such as venting gas or flames may be minimized from heading toward other battery cells 100.

In particular, the protrusion P may be configured to form an inner space. For example, the protrusion P may be formed by folding the top plate 220 multiple times. According to the above-implemented configuration of the present disclosure, since the protrusion P is provided as a part of the top plate 220, a process of joining the protrusion P to the top plate 220 may be omitted, and defects at the joining portion of the protrusion P and the top plate 220 may be minimized.

In this case, the blocking member 300 may be configured so that its end protrudes outward from the top plate 220. Furthermore, the blocking member 300 may be configured so that the end is inserted into the inner space of the protrusion P. As a result, in the case where the top plate 220 is coupled to the case body 310, the protrusion P may be naturally inserted into the protrusion P of the top plate 220. Accordingly, the assemblability may be improved when assembling the battery module 10.

In addition, the upper end of the blocking member 300 may be in close contact with the inner surface of the protrusion P. According to the above-implemented configuration of the present disclosure, the sealing force between the end of the blocking member 300 and the protrusion P of the top plate 220 may be stably secured. Therefore, according to the above-implemented configuration, the plurality of battery cells 100 may be more reliably partitioned not only in the inner space of the module case 200 but also in the outer space, thereby further improving thermal propagation prevention performance between the battery cells 100.

In addition, according to the above-implemented configuration of the present disclosure, since the blocking member 300 is inserted into the protrusion P and supported from both sides, the fixing force between the blocking member 300 and the protrusion P may be further improved. Therefore, the arrangement state of the blocking member 300 and the top plate 220 may be stably maintained.

In particular, according to the above-implemented configuration of the present disclosure, the possibility that heat is transferred to another battery cell 100 due to high-temperature and high-pressure venting gas or flame pushing out the blocking member 300 or due to the blocking member 300 being deformed to be bent by the internal pressure of the venting gas may be reduced. Therefore, when thermal runaway propagation occurs in the battery module 10, the thermal runaway propagation between the battery cells 100 may be effectively prevented or delayed.

Furthermore, according to the above-implemented configuration of the present disclosure, the module case 200 and the blocking member 300 may be disposed to overlap three times along the left-right direction. The module case 200 (in particular, the top plate 220) is made of a metal material with high thermal conductivity such as aluminum, so that heat may be transferred to the module case 200 itself when a thermal event occurs. However, according to the above-implemented configuration, since the end of the blocking member 300 is inserted into the protrusion P, the insulation performance of the module case 200 may be improved. Therefore, heat such as venting gas or flame may be suppressed or delayed from passing through the protrusion P and the blocking member 300 to the adjacent battery cells 100, thereby suppressing thermal propagation through the module case 200.

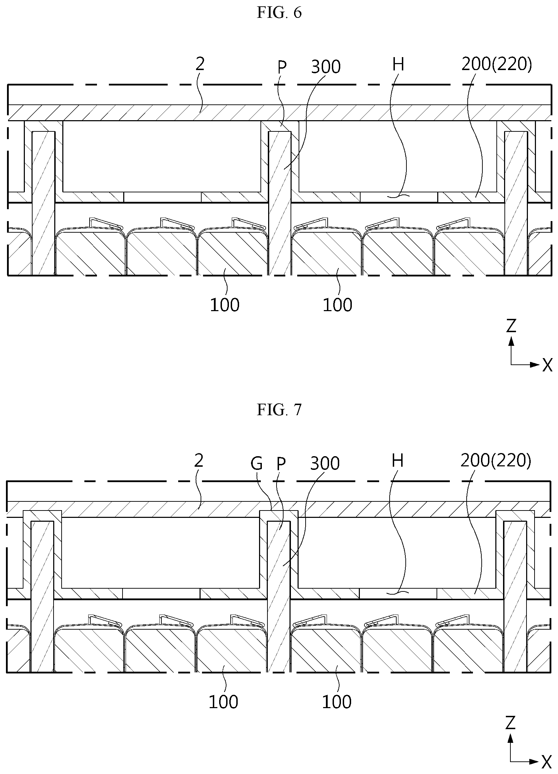

FIG. 6 is a drawing illustrating a protrusion included in a battery module according to another embodiment of the present disclosure.

Referring to FIG. 6, the protrusion P may be configured to be in contact with the inner surface of the pack case 2. For example, the protrusion P may be configured such that its upper end is in contact with the inner surface of the upper portion of the pack case 2. Accordingly, the upper end of the protrusion P and the inner surface of the pack case 2 may be in surface-and-surface contact. In addition, the protrusion P may be supported on the inner surface of the pack case 2.

According to the above-implemented configuration of the present disclosure, since the gap between the protrusion P and the pack case 2 may be minimized, the space between the module case 200 and the pack case 2 may be more reliably sectioned and separated. Accordingly, thermal runaway propagation to other adjacent battery cells 100 may be effectively prevented.

In addition, according to the above-implemented configuration of the present disclosure, since the protrusion P is supported on the pack case 2, deformation of the protrusion P due to high pressure such as venting gas or flame may be prevented. Accordingly, the possibility that the venting gas or flame is transferred to other battery cells 100 due to deformation of the protrusion P by high-temperature and high-pressure venting gas or flame may be reduced.

FIG. 7 is a drawing illustrating a protrusion included in a battery module according to another embodiment of the present disclosure.

Referring to FIG. 7, at least a portion of the protrusion P may be configured to be insertable into the inner surface of the pack case 2. More specifically, the inner surface of the pack case 2 may have a groove G formed by at least a portion being recessed inward. The protrusion P may be inserted into the groove G.

In this case, the upper end of the blocking member 300 may be provided in close contact with the groove G without a gap. That is, the sealing force between the protrusion P and the pack case 2 may be stably secured. Therefore, according to the above-implemented configuration of the present disclosure, it is possible to more reliably prevent venting gas or flames from moving beyond the protrusion P to adjacent battery cells 100. Thus, according to the above-implemented configuration, the plurality of battery cells 100 may be more reliably partitioned in the space between the module case 200 and the pack case 2, so that the thermal propagation prevention performance between the battery cells 100 may be further improved.

In addition, according to the above-implemented configuration of the present disclosure, since the protrusion P is inserted into the pack case 2 and supported on both sides, the fixing force between the pack case 2 and the protrusion P may be secured. As a result, the arrangement state of the protrusion P and the pack case 2 may be stably maintained.

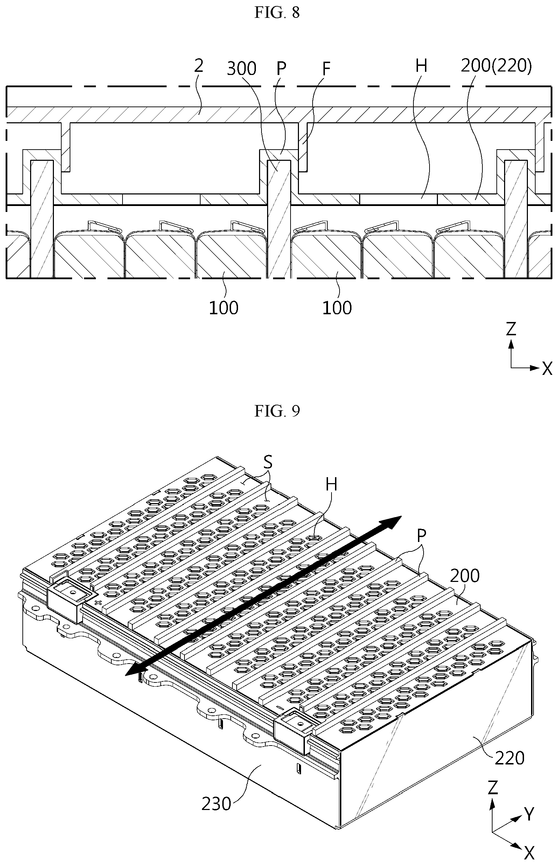

FIG. 8 is a drawing illustrating a protrusion included in a battery module according to another embodiment of the present disclosure.

Referring to FIG. 8, the pack case 2 may have a support F configured to protrude inward from the inner surface.

In this case, the protrusion P may be configured to partially overlap the support F. More specifically, the protrusion P may be configured such that the side surface is in contact with the support F. That is, as disclosed in the embodiment illustrated in FIG. 8, the protrusion P may be configured to partially overlap the support F in the arrangement direction (left-right direction) of the protrusion P and/or the support F. The upper end of the protrusion P may be configured to be in surface contact with the lower end of the support F.

According to the above-implemented configuration of the present disclosure, the distance by which venting gas or flame must travel to pass over the protrusion P may be further increased. Therefore, when thermal runaway propagation occurs in the battery module 10, thermal runaway propagation between the battery cells 100 may be effectively prevented or delayed in the outer space of the module case 200.

In addition, according to the above-implemented configuration of the present disclosure, since the protrusion P is supported by the support F, the possibility that the high-temperature and high-pressure venting gas or flame pushes out the protrusion P or that the protrusion P is deformed to be bent by the internal pressure of the venting gas may be reduced. As a result, the mechanical stability or bonding strength of the battery module 10 may be secured.

FIG. 9 is a top perspective view of a battery module according to an embodiment of the present disclosure, which illustrates a venting path of a battery module according to an embodiment of the present disclosure.

Referring to FIG. 9, a venting hole H may be formed in the module case 200. The venting hole H may be configured to discharge venting gas generated in the battery cell 100 to the outside of the module case 200.

For example, as illustrated in FIG. 9, the venting hole H may be formed on the upper surface of the module case 200, i.e., on the top plate 220, and directional venting toward the top of the battery module 10 may be possible through the venting hole H.

A plurality of venting holes H may be provided at regular intervals in the horizontal direction (X-axis and Y-axis directions). The plurality of venting holes H may be positioned between adjacent blocking members 300 among a plurality of blocking members 300 arranged in one direction.

That is, the venting hole H may be provided above one or more battery cells 100 provided between adjacent blocking members 300. For example, as illustrated in FIG. 3, a blocking member 300 may be disposed for each group of three battery cells 100, and a plurality of venting holes H may be formed above the battery cells 100 provided between the blocking members 300 in a row along the longitudinal direction (Y-axis direction) of the battery cell 100.

As described above, the venting holes H provided in the top plate 220 may be configured to discharge gas or flame generated inside the battery module 10, when thermal runaway occurs in the battery module 10, to the outside of the battery module 10. Accordingly, the remaining portions of the module case 200, excluding the venting holes H, may remain closed, and gas or flame may be discharged in a straight line toward the venting holes H.

According to the above-implemented configuration of the present disclosure, even if a thermal event occurs at any location of the battery cell 100, the gas or flame generated from the battery cell 100 may be discharged to the outside of the battery module 10 through specific venting holes H provided above the battery cell 100, thereby enabling smooth venting.

In this case, the protrusion P may be interposed between the venting holes H. That is, the protrusion P may be provided between adjacent venting holes H among the plurality of venting holes H. Accordingly, gas or flame discharged from the venting hole H may be suppressed from moving to adjacent venting holes H.

According to the above-implemented configuration of the present disclosure, the venting gas discharged to the outside of the module case 200 through the venting hole H may be prevented from flowing back into the module case 200 through other adjacent venting holes H. Therefore, thermal propagation between the battery cells 100 may be effectively suppressed or delayed.

Furthermore, the protrusion P may be configured to extend along one direction. For example, as disclosed in the embodiment illustrated in FIG. 9, the protrusion P may be configured to extend along the longitudinal direction of the battery cell 100. In addition, the protrusion P may be configured to extend along the longitudinal direction (front-back direction) of the top plate 220. This protrusion P may be configured to partition the plurality of venting holes H.

According to the above-implemented configuration of the present disclosure, the venting gas or the like may be blocked from moving from the outside of the module case 200 along the stacking direction of the battery cell 100 by the protrusion P. In particular, the venting gas or flame may be suppressed from moving beyond the protrusion P toward another adjacent venting hole H. Therefore, the thermal propagation between the battery cells 100 may be effectively suppressed or delayed.

In addition, a plurality of protrusions P may be provided. The plurality of protrusions P may be disposed to be spaced a predetermined distance apart from each other in the horizontal direction. For example, the plurality of protrusions P may be disposed to be spaced apart from each other along the direction (left and right direction) in which the battery cells 100 are disposed.

In this case, a venting path S may be formed between adjacent protrusions P. The venting path S may be formed in the outer space of the module case 200. In this case, the venting path S may be defined as a space formed by the pack case 2, the protrusion P, and the module case 200. The venting path S may be configured to be in communication with the venting hole H. That is, the fluid such as venting gas or flame discharged from the venting holes H grouped by the protrusions P may flow through the venting path S formed between the protrusions P.

In this case, a plurality of venting paths S may be formed, and the protrusion P may be configured to block the fluid such as venting gas or flame from moving to another venting path S. According to the above-implemented configuration of the present disclosure, the venting gas or the like of the venting path S may flow only through one venting path S, instead of moving to other adjacent battery cells 100. Accordingly, the venting gas may be restricted from moving between the venting paths S adjacent to each other in the left-right direction (X-axis direction) with one protrusion P positioned therebetween.

The venting path S may be configured to extend along the front-back direction, such as the direction in which the protrusion P extends. In addition, the protrusion P may be configured to guide the fluid flowing through the venting path S in at least one direction in the outer space of the module case 200.

More specifically, the venting path S may be configured to be open at both ends in the longitudinal direction. That is, as indicated by the arrows in FIG. 9, the venting gas may be discharged to both ends of the venting path S in the longitudinal direction. In this case, the protrusion P may guide the venting gas to flow toward both ends of the venting path S.

If gas generated inside the battery module 10 is discharged in various directions, the time for discharging the venting gas may become longer, which may significantly reduce the safety of the battery module 10. However, according to the present configuration, since the venting path S is formed by the protrusion P, directional venting of the venting gas may be more effectively induced from the outside of the module case 200. Accordingly, according to the above-implemented configuration of the present disclosure, it is possible to minimize the spreading of the fluid such as venting gas or flame in all directions from the outside of the module case 200.

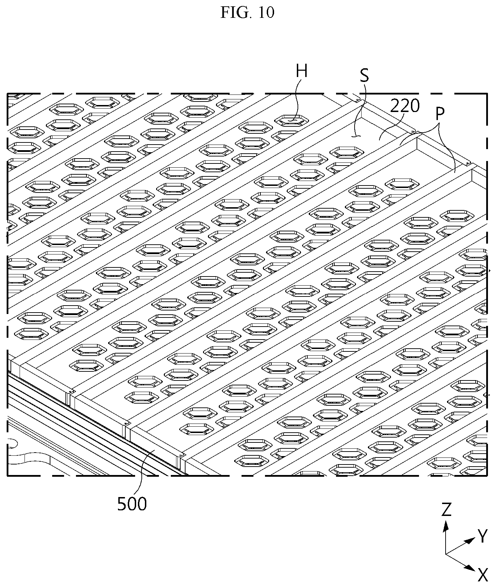

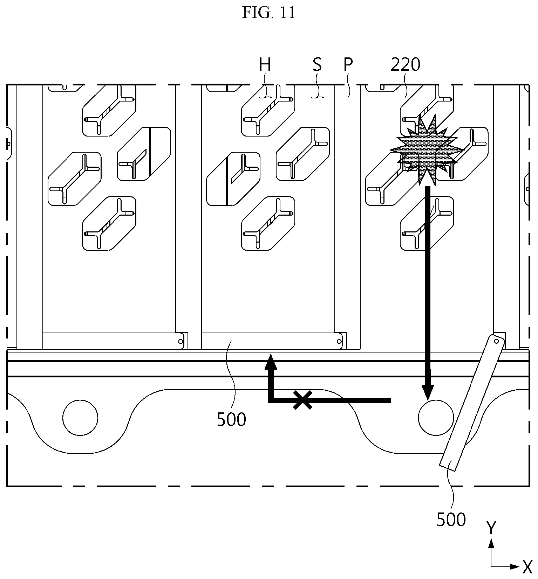

FIG. 10 and FIG. 11 are drawings illustrating a cover member included in a battery module according to another embodiment of the present disclosure.

According to the embodiment above, the fluid such as venting gas or flame flowing through a venting path S may be discharged from the venting path S and may re-enter another venting path S. Therefore, as disclosed in the embodiment illustrated in FIG. 10 and FIG. 11, the battery module 10 according to another embodiment of the present disclosure may further include a cover member 500. The cover member 500 may be configured to prevent the fluid such as venting gas or flame discharged from a venting path S from re-entering another venting path S.

More specifically, the cover member 500 may be provided between adjacent protrusions P. That is, the cover member 500 may be provided on at least one side of the venting path S. For example, as disclosed in the embodiment illustrated in FIG. 10, the cover member 500 may be provided on both sides of the venting path S between adjacent protrusions P.

The cover member 500 may be configured to be openable by the venting gas inside the venting path S. That is, the cover member 500 may be configured to be openable by the pressure of the venting gas directed from the inside to the outside of the venting path S. In addition, the cover member 500 may be configured not to be opened by the pressure of the venting gas directed from the outside to the inside of the venting path S. To this end, the cover member 500 may be configured to be openable only in one direction, that is, from the inside to the outside.

As a more specific embodiment, as disclosed in the embodiment illustrated in FIGS. 10 and 11, the cover member 500 may include an opening/closing portion 510 configured to cover the venting path S and be openable, and a hinge 520 configured to connect the opening/closing portion 510 and the protrusion P. The hinge 520 may be configured to have elasticity. In this case, the elastic coefficient of the hinge 520 may be designed such that the opening/closing portion 510 is easily opened by the pressure of venting gas or flame. In addition, the hinge 520 may be configured to rotate only in one direction.

Accordingly, the hinge 520 may be rotated by the pressure of venting gas or flame discharged to the venting path S through the venting hole H provided between any protrusions P, so that the opening/closing portion 510 may be rotated outward. Therefore, the venting gas or flame may be discharged to the outside of the venting path S. In addition, in other venting paths S, the venting gas or flame may be blocked by the cover member 500 from flowing in from the outside.

According to the above-implemented configuration of the present disclosure, when thermal runaway occurs in a battery cell 100, not only may the venting gas or flame inside the venting path S located above the battery cell 100 be smoothly discharged to the outside of the battery module 10, but the discharged venting gas or flame may also be prevented from flowing back into the battery module 10. Therefore, the thermal runaway propagation may be effectively prevented or delayed by minimizing the thermal propagation to neighboring battery cells 100.

Referring to FIG. 2 and other drawings, the battery module 10 according to an embodiment of the present disclosure may further include a module cover 600.

Referring to FIGS. 5 and 6, the module cover 600 may be configured to at least partially cover the module case 300. For example, it may be configured to cover the top plate 220. The module cover 600 may be provided outside and/or inside the module case 300.

In particular, the module cover 600 may be configured to cover the venting holes H. In this case, the module cover 600 may be configured in the form of a sheet and placed on the upper surface of the battery cells 100. The module cover 600 may be configured to cover the plurality of venting holes H at once.

The module cover 600 may be configured to suppress venting gas or flames emitted when a thermal event occurs inside the battery module 10 from spreading to another battery module 10. To this end, the module cover 600 may be made of a material having excellent heat resistance and/or fire resistance, such as a mica sheet or a silicon composite material.

Accordingly, the module cover 600 may maintain morphological stability without deformation even when high-temperature heat is generated, thereby stably blocking high-temperature gas or flame generated from the battery cell 100.

According to the above-implemented configuration of the present disclosure, since the module cover 600 is made of a hard and heat-resistant material, deformation due to high-temperature gas or flames may be minimized.

The module cover 600 may be configured to be at least partially openable by venting gas or flame. Specifically, at least a portion of the module cover 600 may be configured to be ruptured by the pressure or heat of the venting gas heading toward the venting hole H. Alternatively, at least a portion of the module cover 600 may be configured to be completely separated.

To this end, the module cover 600 may be provided with a notched portion N. The notched portion N may be configured to be opened by the venting gas, thereby discharging the venting gas to the outside of the battery module 10.

A plurality of notched portions N may be provided at regular intervals in the horizontal direction (X-axis and Y-axis directions). In particular, the notched portions N may be formed at positions corresponding to the venting holes H. In addition, the notched portion N may be configured in a shape corresponding to the venting hole H.

According to the above-implemented configuration of the present disclosure, when a thermal event occurs in a specific battery cell 100, the notched portion N provided on one side of the specific battery cell 100 may be ruptured to open at least one of the plurality of venting holes H. Accordingly, venting gas or the like may be discharged to the outside of the module case 200 through the open venting hole H (see the bold arrow in FIG. 16).

In addition, the module cover 600 may prevent gas or flame discharged to the outside of the module case 200 from flowing back into the battery module 10. That is, the venting hole H provided on the side of the battery cell 100 where the thermal event does not occur may not be opened and may remain closed. As a result, the venting gas or flame discharged to the outside through the open venting hole H may be fundamentally blocked from flowing back into the battery module 10. In addition, the module cover 600 of the remaining portion that is not ruptured may block not only heat but also high-temperature gas, flame, or discharges generated from the battery cell 100.

That is, according to the above-implemented configuration of the present disclosure, when thermal runaway occurs in the battery module 10, not only may the venting gas or flame generated inside the battery module 10 be smoothly discharged to the outside of the battery module 10, but the discharged venting gas or flame may also be prevented from flowing back into the battery module 10. Therefore, the thermal runaway propagation may be effectively prevented or delayed by minimizing the thermal propagation to neighboring battery cells 100 or battery modules 10.

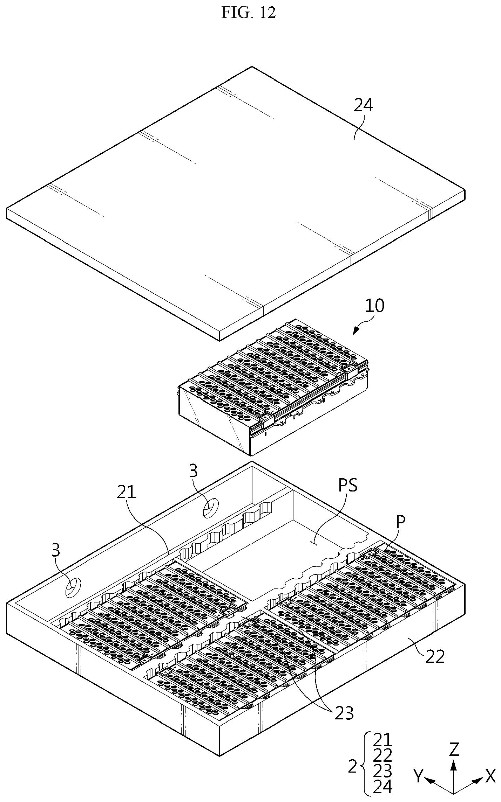

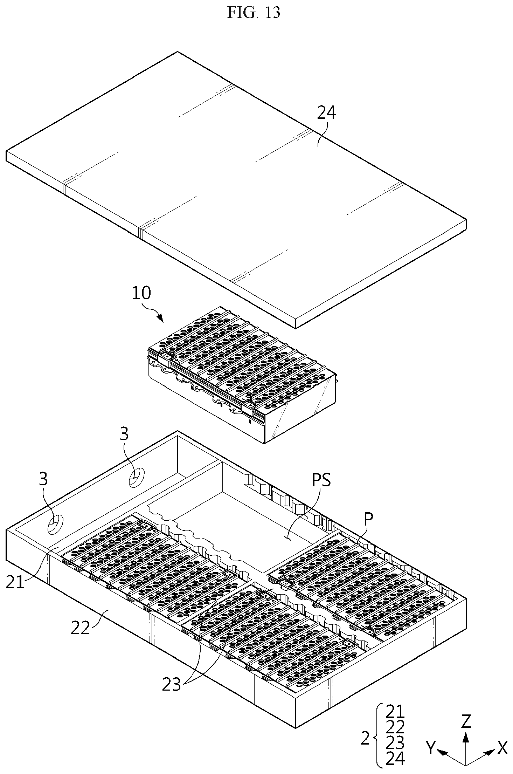

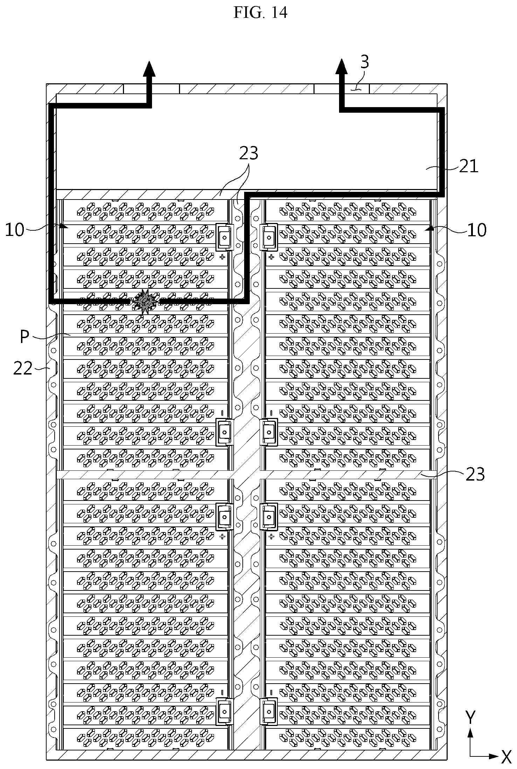

FIG. 12 is an exploded perspective view of a battery pack according to an embodiment of the present disclosure. FIG. 13 is an exploded perspective view of a battery pack according to another embodiment of the present disclosure. In addition, FIG. 14 is a plan view of a battery pack according to another embodiment of the present disclosure, which illustrates movement of gas or the like in a battery pack during thermal runaway in a specific battery module.

Referring to FIGS. 12 to 14, a battery pack 1 according to an embodiment of the present disclosure may include a pack case 2 and one or more battery modules 10 according to an embodiment of the present disclosure.

The pack case 2 may be configured to store a plurality of battery modules 10. The pack case 2 may have a plurality of storage spaces PS configured to store a plurality of battery modules 10, respectively. The pack case 2 may be configured to store a plurality of battery modules 10 seated thereon. The pack case 2 may be formed in the form of a rectangular box.

In addition, as described above, the battery module 10 may include a plurality of battery cells 100, and a module case 200 configured to store the plurality of battery cells 100. In addition, the module case 200 may have a protrusion P configured to protrude outward toward the inner surface of the pack case 2.

According to the above-implemented configuration of the present disclosure, high-temperature venting gas or flame discharged into the space between the module case 200 and the pack case 2 may be suppressed by the protrusion P of the module case 200 from moving along the stacking direction of the battery cells 100.

That is, according to the above-implemented configuration of the present disclosure, by reliably partitioning the space between the module case 200 and the pack case 2, even if a thermal event occurs in some battery cells 100 inside the battery module 10, the gas or flame may be effectively prevented or delayed from spreading to other battery cells 100 inside the battery module 10 and causing thermal runaway. Accordingly, the safety and reliability of the battery module 10 may be secured.

In addition, the battery module 10 may further include a blocking member 300 configured to block the flow of heat or fluid between the battery cells 100 in the inner space of the module case 200 and having an end inserted into the inner space of the protrusion P.

According to the above-implemented configuration of the present disclosure, the battery cells 100 may be reliably partitioned in the battery module 10, thereby effectively preventing or delaying thermal runaway between the battery cells 100.

A plurality of battery modules 10 may be disposed along a plurality of columns and rows inside the pack case 2. For example, as disclosed in the embodiment illustrated in FIG. 12, a plurality of battery modules 10 may be disposed such that two battery modules 10 are arranged in the front-back direction (Y-axis direction) of the battery pack 1 and such that two battery modules 10 are arranged in the left-right direction with the protrusion P extending in the front-back direction. Alternatively, as disclosed in the embodiment illustrated in FIG. 13, a plurality of battery modules 10 may be disposed such that two battery modules 10 are arranged in the front-back direction of the battery pack 1 and such that two battery modules 10 are arranged in the left-right direction (X-axis direction) with the protrusion P extending in the left-right direction.

In addition, although not illustrated in the drawing, the pack case 2 may be configured to store components, such as a BMS (Battery Management System), a current sensor, and a fuse, for integrated control of charging and discharging of one or more battery cells 110 therein.

In addition, the protrusion P may be configured to be in contact with the inner surface of the pack case 2. For example, the protrusion P may be configured to be in contact with the upper surface of the pack case 2.

More specifically, referring to FIGS. 12 to 14, the pack case 2 may include a base frame 21, a side frame 22, a cross-beam 23, and a pack lead 24.

The base frame 21 may form the lower surface of the pack case 2, and may be configured substantially in the form of a square plate. In addition, the base frame 21 may be provided with a flat upper surface so that a plurality of battery modules 10 may be stably seated thereon.

The side frame 22 may extend upward from edges of the base frame 21. The side frame 22 may have a plurality of unit walls so as to surround the battery module 10. More specifically, the side frame 22 may include a rear wall located at the end of the base frame 21 in the +Y direction, a right wall located at the end in the -X direction, a front wall located at the end in the -Y direction, and a left wall located at the end in the +X direction, thereby forming the sides of the pack case 2.

The cross-beam 23 may be configured to partition a plurality of battery modules 10. That is, the cross-beam 23 may be configured to partition a plurality of storage spaces PS. For example, the cross-beam 23 may be formed in the form of a partition that extends in the left-right direction, and may be interposed between the battery modules 10 that are adjacently disposed in the front-back direction. In addition, the cross-beam 23 may be formed in the form of a partition that extends in the front-back direction, and may be interposed between the battery modules 10 that are adjacently disposed in the left-right direction.

The cross-beam 23 may be configured to extend further upward than the battery module 10. Furthermore, the cross-beam 23 may be configured to block the movement of the fluid, such as venting gas or flame, or heat between the battery modules 10.

Accordingly, when the battery module 10 is in an abnormal state, the high-temperature gas or flames generated in the battery module 10 may be minimized from moving toward other adjacent battery modules 10, and thus the thermal runaway propagation in the battery pack 1 may be effectively prevented or delayed. Accordingly, the safety and reliability of the battery pack 1 may be ensured.

In addition, the pack lid 24 may be configured to cover the top of the plurality of battery modules 10. The pack lid 24 may be coupled to the upper portion of the side frame 22 to form the upper side of the pack case 2.

In addition, the battery pack 1 according to an embodiment of the present disclosure may further include a venting device 3. The venting device 3 may be configured to discharge substances generated from the battery module 10 to the outside of the pack case 2.

The venting device 3 may be configured in the form of a hole extending from the inside to the outside of the pack case 2. Alternatively, the venting device 3 may be configured to be mountable in the hole of the pack case 2 and to operate when the discharges are generated inside the pack case 2.

The venting device 3 may be provided on the side of the pack case 2, that is, on the side frame 22. A plurality of venting devices 3 may be provided. The venting device 3 may be located on at least some of the unit walls of the side frame 22. In addition, the venting device 3 may be separately formed on two or more unit walls, or two or more venting devices 3 may be formed on one unit wall. For example, referring to FIGS. 12 to 14, two venting devices 3 may be provided on the rear wall. In addition, a plurality of venting devices 3 may be provided symmetrically with respect to the central axis of the side frame 22.

In this case, the venting gas or the like discharged through the venting hole H of the battery module 10 may be configured to head toward the venting device 3. Accordingly, the venting gas generated in the battery module 10 may be discharged to the outside of the pack case 2 through the venting device 3.

According to the above-implemented configuration of the present disclosure, when a thermal event occurs in the battery module 10, the venting gas inside the venting path S may be quickly discharged to the outside of the pack case 2 through the venting device 3. Therefore, the internal pressure inside the pack case 2 may be prevented from increasing, and further chain ignition of other battery modules 10 may be prevented.

The number or locations of the venting devices 3 described based on the embodiments in FIG. 12 and the like are merely examples, and may vary.

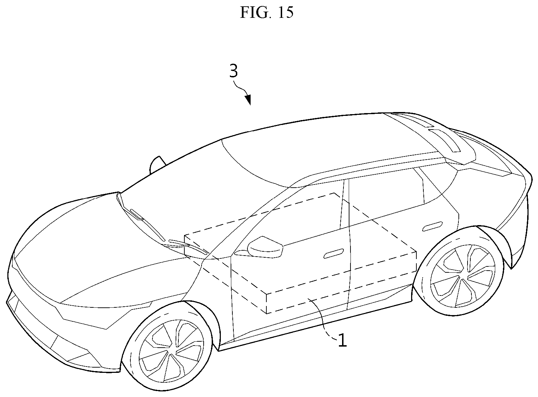

FIG. 15 is a schematic perspective view of a vehicle including a battery pack according to an embodiment of the present disclosure.

Referring to FIG. 15, a vehicle V according to an embodiment of the present disclosure may include one or more battery packs 1 according to an embodiment of the present disclosure or battery modules 10 according to an embodiment of the present disclosure. The vehicle V according to the present disclosure may be, for example, an electric vehicle, a hybrid vehicle, or a plug-in hybrid vehicle. The vehicle V may include a four-wheel vehicle and a two-wheel vehicle. The vehicle V may be operated by power supplied from the battery pack 1 or battery module 10 according to an embodiment of the present disclosure. The vehicle V may move in the front-back direction, based on the battery pack 1.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module stored in a pack case, the battery module comprising:
a plurality of battery cells; and
a module case configured to store the plurality of battery cells in an inner space and having a protrusion protruding outward toward an inner surface of the pack case.

2. The battery module according to claim 1,
wherein the protrusion is configured to partition a space between the module case and the pack case.

3. The battery module according to claim 1,
further comprising a blocking member configured to block a flow of heat or fluid between the battery cells in the inner space of the module case.

4. The battery module according to claim 3,
wherein the blocking member is configured such that its end is in contact with an inner surface of the module case.

5. The battery module according to claim 3,
wherein the protrusion is configured to have an inner space formed thereon, and
wherein the blocking member is configured such that its end is inserted into the inner space of the protrusion.

6. The battery module according to claim 1,
wherein the protrusion is configured to be in contact with the inner surface of the pack case.

7. The battery module according to claim 1,
wherein the protrusion is configured such that at least a portion thereof is insertable into the inner surface of the pack case.

8. The battery module according to claim 1,
wherein the pack case comprises a support configured to protrude inward from the inner surface, and
wherein the protrusion is configured to partially overlap the support.

9. The battery module according to claim 1,
wherein a plurality of venting holes configured to discharge venting gas generated from the battery cell to an outside are formed on an upper surface of the module case, and
wherein the protrusion is interposed between the venting holes.

10. The battery module according to claim 1,
wherein the protrusion is configured to extend along a longitudinal direction of the battery cell.

11. The battery module according to claim 1,
wherein a plurality of protrusions are provided to be spaced apart from each other, and
wherein a venting path is formed between adjacent protrusions.

12. The battery module according to claim 11,
further comprising a cover member provided between the adjacent protrusions and configured to be openable by venting gas inside the venting path.

13. A battery pack comprising a battery module according to any one of claims 1 to 12.

14. A vehicle comprising a battery module according to any one of claims 1 to 12.

15. A battery pack comprising:
a pack case having a storage space formed therein; and
a battery module stored in the storage space of the pack case, and comprising a plurality of battery cells and a module case configured to store the plurality of battery cells, and
wherein the module case comprises a protrusion configured to protrude outward toward an inner surface of the pack case.

16. The battery pack according to claim 15,
wherein the battery module further comprises a blocking member configured to block a flow of heat or fluid between the battery cells in an inner space of the module case, and having an end inserted into an inner space of the protrusion.

17. The battery pack according to claim 15,
wherein the protrusion is configured to be in contact with the inner surface of the pack case.
